# EUROPÄISCHE PATENTSCHRIFT

(11) **EP 3 187 785 B1**
(45) Veröffentlichungstag und Bekanntmachung des Hinweises auf die Patenterteilung: **03.07.2024**
(21) Anmeldenummer: 16200632.4
(22) Anmeldetag: 25.11.2016
(51) Int. Cl.: F24C 7/08, G06F 3/01

(54) **KOCHFELD UMFASSEND EINE GESTENDETEKTION**
COOKING HOB COMPRISING A GESTURE DETECTION
PLAQUE DE CUISSON COMPRENANT UNE DÉTECTION DE GESTES

(30) Priorität: 22.12.2015 ES 201531874
(43) Veröffentlichungstag der Anmeldung: 05.07.2017
(73) Patentinhaber: BSH Hausgeräte GmbH, 81739 München (DE)
(72) Erfinder: Inogés Blasco, Alejandro, 50003 Zaragoza (ES); Llorente Gil, Sergio, 50009 Zaragoza (ES); Lopez Nicolas, Gonzalo, 50001 Zaragoza (ES); Montijano Muñoz, Eduardo, 50005 Zaragoza (ES); Palacios Gasós, Jose Manuel, 50018 Zaragoza (ES); Sagües Blázquiz, Carlos, 50018 Zaragoza (ES)

(56) Entgegenhaltungen:
- EP-A1- 2 806 334
- WO-A1-2016/020054
- CH-A1- 700 524
- DE-A1-102014 007 173
- DE-A1-102014 011 771
- GB-A- 2 525 398
- US-A1- 2014 013 417
- US-A1- 2014 160 013

## Beschreibung

Die Erfindung betrifft ein Kochfeld nach dem Oberbegriff des Patentanspruchs 1.

Aus der deutschen Offenlegungsschrift DE 2012 216 936 A1 ist bereits eine als Kochfeldvorrichtung ausgebildete Haushaltsgerätevorrichtung bekannt, in welcher verschiedene Bediengesten vorgeschlagen werden. Zu einer Auswahl einer Heizzone wird eine Bediengeste in Form einer Bewegung eines Körperteils eines Bedieners in Richtung derjenigen Heizzone vorgeschlagen, welche der Bediener auswählen will. Eine weitere vorgeschlagene Bediengeste dient zu einer Änderung einer Heizleistung und ist als eine kreisende Bewegung des Körperteils ausgebildet.

Aus der europäischen Patentanmeldung mit der Anmeldenummer EP 15 18 48 70.2 ist eine Haushaltsgerätevorrichtung mit einer Sensoreinheit bekannt, welche in einer Einbaulage unterhalb einer Kochfeldplatte angeordnet ist und in einem Betriebszustand eine Bediengeste eines Bedieners detektiert. Eine Steuereinheit führt in dem Betriebszustand auf Basis der durch die Sensoreinheit detektierten Bediengeste eine Aktion aus oder leitet eine Aktion ein.

Aus der deutschen Offenlegungsschrift DE 10 2014 007173 A1 ist ein Kochfeld aufweisend eine Anzeigefläche bekannt, wobei eine Sensoreinheit dazu vorgesehen ist, in wenigstens einem Betriebszustand wenigstens eine Bediengeste eines Bedieners zu detektieren und eine Steuereinheit dazu vorgesehen ist, in dem Betriebszustand auf Basis der durch die Sensoreinheit detektierten Bediengeste wenigstens eine Aktion einzuleiten.

Die Aufgabe der Erfindung besteht insbesondere darin, ein gattungsgemäßes Kochfeld mit verbesserten Eigenschaften hinsichtlich eines hohen Bedienkomforts bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einem Kochfeld mit einer Sensoreinheit, die dazu vorgesehen ist, in wenigstens einem Betriebszustand wenigstens eine Bediengeste eines Bedieners zu detektieren, und mit einer Steuereinheit, die dazu vorgesehen ist, in dem Betriebszustand auf Basis der durch die Sensoreinheit detektierten Bediengeste wenigstens eine Aktion auszuführen und/oder einzuleiten.

Es wird vorgeschlagen, dass die Steuereinheit dazu vorgesehen ist, in dem Betriebszustand in Abhängigkeit von zumindest einer Bestätigungs-Bediengeste zumindest eine Vorauswahl anzunehmen. Unter einer "Sensoreinheit" soll insbesondere eine Einheit verstanden werden, die zu einer Detektion der Bediengeste zumindest einen Sensor aufweist und die insbesondere die von dem Sensor detektierte Bediengeste in elektrische Signale umwandelt und vorteilhaft an die Steuereinheit ausgibt. Beispielsweise könnte der Sensor dazu vorgesehen sein, die Bediengeste mittels Druckschwankungen und/oder Dichteschwankungen zu detektieren, wie insbesondere mittels Ultraschall. Alternativ oder zusätzlich könnte der Sensor dazu vorgesehen sein, die Bediengeste mittels elektromagnetischer Wellen, wie beispielsweise sichtbarem Licht und/oder ultravioletter Strahlung und/oder Infrarot-Strahlung und/oder Mikrowellen-Strahlung, zu detektieren. Vorteilhaft könnte der Sensor insbesondere ein optischer Sensor sein und insbesondere dazu vorgesehen sein, die Bediengeste mittels einer Bilderfassung und/oder mittels einer Kamera und/oder mittels einer Streifenprojektion zu detektieren. Alternativ oder zusätzlich könnte die Sensoreinheit insbesondere dazu vorgesehen sein, die Bediengeste mittels eines stereoskopischen Systems, welches insbesondere durch zumindest zwei Sensoren und vorteilhaft durch zumindest zwei optische Sensoren definiert sein könnte, zu detektieren. Die Sensoreinheit könnte alternativ oder zusätzlich insbesondere dazu vorgesehen sein, die Bediengeste mittels zumindest einer stereoskopischen Kamera zu detektieren. Insbesondere könnte die Sensoreinheit zumindest eine RGB-Kamera und/oder zumindest eine stereoskopische Kamera und/der zumindest eine monochromatische Kamera und/oder zumindest einen Time-of-Flight-Sensor und/oder zumindest einen RGB-D Sensor aufweisen. Die Sensoreinheit könnte in einer Einbaulage beispielsweise auf einer einem Bediener zugewandten Seite einer Kochfeldplatte sein. Die Sensoreinheit könnte insbesondere oberhalb, insbesondere direkt oberhalb, der Kochfeldplatte angeordnet sein. Vorzugsweise ist die Sensoreinheit in einer Einbaulage auf einer einem Bediener abgewandten Seite einer Kochfeldplatte angeordnet, wobei die Sensoreinheit insbesondere innerhalb eines von einem Außengehäuse umschlossenen Hohlraums angeordnet ist. Insbesondere weist das Kochfeld zumindest eine Haushaltsgeräteplatte auf, welche als eine Kochfeldplatte ausgebildet ist. Unter einer "Bediengeste" soll insbesondere eine Bewegung eines Körperteils des Bedieners verstanden werden, welche der Bediener zu einer Eingabe von Betriebsparametern bewusst, insbesondere zielgerichtet, und vorteilhaft mit einem zumindest weitgehend vordefinierten Bewegungsablauf ausführt, um insbesondere eine korrekte Detektion durch die Sensoreinheit und/oder eine Auswertung durch die Steuereinheit zu gewährleisten, und welche der Bediener insbesondere berührungslos, insbesondere unter Vermeidung einer Berührung und/oder Kontaktierung einer Bedienoberfläche, vornimmt. Das Körperteil des Bedieners könnte beispielsweise ein Arm, besonders vorteilhaft eine Hand und/oder vorteilhaft zumindest ein Finger, des Bedieners sein. Insbesondere ist die Steuereinheit dazu vorgesehen, in dem Betriebszustand eine Anzahl an Fingern zu zählen und/oder eine Position von Fingern zu berücksichtigen und insbesondere mit in einer Speichereinheit der Steuereinheit gespeicherten, insbesondere vordefinierten Bediengesten zu vergleichen. Die Steuereinheit ist insbesondere dazu vorgesehen, in dem Betriebszustand insbesondere in Abhängigkeit von einer Anzahl an gezählten Fingern und/oder in Abhängigkeit von einer Position an detektierten Fingern insbesondere vordefinierte Bediengesten zu erkennen und vorteilhaft zu berücksichtigen. Die Steuereinheit könnte insbesondere dazu vorgesehen sein, eine Anzahl an Fingern der Bediengeste zu zählen und die Bediengeste ausschließlich in Abhängigkeit einer Übereinstimmung zwischen der gezählten Anzahl an Fingern und einer in der Speichereinheit gespeicherten Anzahl an Fingern von zumindest einer Bediengeste, welche insbesondere vordefiniert und vorteilhaft Teil einer Gruppe von vordefinierten Bediengesten sein könnte, zu berücksichtigen. Die Steuereinheit könnte alternativ oder zusätzlich insbesondere dazu vorgesehen sein, eine Position von Fingern der Bediengeste zu ermitteln und die Bediengeste ausschließlich in Abhängigkeit einer Übereinstimmung zwischen der ermittelten Position der Finger der Bediengeste und in der Speichereinheit gespeicherten Positionen von Fingern von zumindest einer Bediengeste, welche insbesondere vordefiniert und vorteilhaft Teil einer Gruppe von vordefinierten Bediengesten sein könnte, zu berücksichtigen. Die Bedienoberfläche könnte eine Oberfläche einer als Kochfeldplatte ausgebildeten Haushaltsgeräteplatte, und/oder eine Oberfläche einer Bedienerschnittstelle und/oder eine Oberfläche eines insbesondere berührungsempfindlichen Displays sein. Die Bediengeste ist insbesondere zu einer berührungslosen Übermittlung von Bedienbefehlen insbesondere an die Steuereinheit vorgesehen. Insbesondere weist das Kochfeld zumindest eine Bedienerschnittstelle auf, welche insbesondere zu einer Eingabe und/oder zu einer Auswahl von Betriebsparametern vorgesehen ist. Unter "vordefiniert" soll insbesondere zeitlich zuvor insbesondere unveränderbar definiert und/oder festgelegt und/oder in einer Speichereinheit der Steuereinheit gespeichert verstanden werden. Unter einer "Steuereinheit" soll insbesondere eine elektronische Einheit verstanden werden, die vorzugsweise in einer Steuer- und/oder Regeleinheit des Kochfelds zumindest teilweise integriert ist und die vorteilhaft dazu vorgesehen ist, zumindest die elektrischen Komponenten des Kochfelds zu steuern und/oder zu regeln, und die vorzugsweise dazu vorgesehen ist, auf Basis der durch die Sensoreinheit detektierten Bediengeste wenigstens eine Aktion auszuführen und/oder einzuleiten. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Die Steuereinheit wertet insbesondere die von der Sensoreinheit detektierte Bediengeste aus, wobei die Steuereinheit insbesondere die detektierte Bediengeste mit in der Speichereinheit der Steuereinheit gespeicherten Bediengesten vergleicht und vorteilhaft einer Aktion zuordnet, welche die Steuereinheit anschließend insbesondere ausführt und/oder einleitet. Unter der Wendung, dass die Steuereinheit eine Aktion "einleitet", soll insbesondere verstanden werden, dass die Steuereinheit wenigstens ein Signal, wie insbesondere einen Befehl und/oder eine Ausführungsanordnung, an eine weitere Einheit, beispielsweise über ein Bussystem, ausgibt, welche die Aktion anschließend ausführt. Beispielsweise könnte die Steuereinheit das Signal an eine Ausgabeeinheit ausgeben, um insbesondere eine Ausgabe an einen Bediener zu erreichen. Alternativ oder zusätzlich könnte die Steuereinheit das Signal an eine Versorgungseinheit des Kochfelds ausgeben, um eine Aktivierung einer elektrischen Einheit zu erreichen, wie beispielsweise einer Heizeinheit.

Vorteilhaft gibt die Steuereinheit das Signal in dem Betriebszustand an eine Bedienerschnittstelle und/oder zumindest an die Anzeigefläche aus. Unter einer "Bestätigungs-Bediengeste" soll eine Bediengeste verstanden werden, welche insbesondere zu einer Bestätigung der Vorauswahl vorgesehen ist und in Abhängigkeit welcher die Steuereinheit insbesondere eine der Vorauswahl zugeordnete Aktion ausführt und/oder einleitet. Beispielsweise könnte die Bestätigungs-Bediengeste zumindest eine insbesondere vordefinierte, der Annahme der Vorauswahl zugeordnete Gestalt insbesondere des Körperteils des Bedieners aufweisen. Alternativ oder zusätzlich könnte die Bestätigungs-Bediengeste eine insbesondere vordefinierte, der Annahme der Vorauswahl zugeordnete Bewegungsrichtung und/oder Bewegungsart und/oder Bewegungsform insbesondere des Körperteils des Bedieners aufweisen. Beispielsweise könnte die Bestätigungs-Bediengeste einteilig ausgebildet sein und insbesondere aus einem insbesondere einzigen Teil der Bestätigungs-Bediengeste und/oder aus einer insbesondere einzigen Form und/oder Gestalt des Körperteils bestehen. Alternativ oder zusätzlich könnte die Bestätigungs-Bediengeste zumindest zweiteilig und insbesondere mehrteilig ausgebildet sein und insbesondere aus zumindest zwei verschiedenen Teilen der Bestätigungs-Bediengeste und/oder aus zumindest zwei verschiedenen Formen und/oder Gestalten des Körperteils bestehen. Die Bestätigungs-Bediengeste könnte insbesondere zu einer Bestätigung einer Vorauswahl einer Heizzone und/oder einer Vorauswahl einer Heizintensität und/oder einer Vorauswahl einer Timer-Einstellung und/oder einer Vorauswahl einer Aktivierung eines Alarms und/oder einer Vorauswahl einer Deaktivierung eines Alarms vorgesehen sein. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch die erfindungsgemäße Ausgestaltung kann insbesondere ein hoher Bedienkomfort erreicht werden. Insbesondere kann einem Bediener die Möglichkeit gegeben werden, selbst über einen Zeitpunkt einer Bestätigung der Vorauswahl und damit verbunden einer Ausführung einer der Vorauswahl zugeordneten Aktion zu entscheiden, wodurch ein besonders hoher Komfort erreicht werden kann. Insbesondere kann eine vorschnelle Ausführung einer der Vorauswahl zugeordneten Aktion, beispielsweise im Fall einer Meinungsänderung des Bedieners, vermieden werden. Insbesondere kann eine hohe Akzeptanz bei einem Bediener erreicht werden.

Zudem wird vorgeschlagen, dass die Steuereinheit dazu vorgesehen ist, in dem Betriebszustand die Vorauswahl ausschließlich in Abhängigkeit von vordefinierten Bestätigungs-Bediengesten anzunehmen. Insbesondere ist die Steuereinheit dazu vorgesehen, in dem Betriebszustand zumindest eine detektierte Bediengeste mit in der Speichereinheit der Steuereinheit gespeicherten Bestätigungs-Bediengesten zu vergleichen und insbesondere ausschließlich bei ausreichender Übereinstimmung zwischen der detektierten Bediengeste und den in der Speichereinheit der Steuereinheit gespeicherten Bestätigungs-Bediengesten die Vorauswahl anzunehmen. Die Steuereinheit ist insbesondere dazu vorgesehen, in dem Betriebszustand zumindest eine detektierte Bediengeste, welche sich von insbesondere in der Speichereinheit der Steuereinheit gespeicherten Bestätigungs-Bediengesten unterscheidet, unberücksichtigt zu lassen und/oder zu ignorieren und insbesondere eine Ausführung einer der Bestätigungs-Bediengeste zugeordneten Aktion zu unterlassen. Dadurch kann insbesondere eine hohe Sicherheit gewährleistet und/oder eine Verärgerung eines Bedieners über fälschlicherweise ausgeführte Aktionen vermieden werden.

Die Steuereinheit ist insbesondere dazu vorgesehen, in dem Betriebszustand in Abhängigkeit von einer insbesondere erstmaligen Detektion einer Bestätigungs-Bediengeste, insbesondere eines ersten Teils einer Bestätigungs-Bediengeste, eine vordefinierte Bestätigungs-Zeitspanne zu starten. Vorzugsweise ist die Steuereinheit dazu vorgesehen, in dem Betriebszustand die Vorauswahl ausschließlich in Abhängigkeit von vordefinierten und innerhalb einer vordefinierten Bestätigungs-Zeitspanne durchgeführten Bestätigungs-Bediengesten anzunehmen. Insbesondere ist die Steuereinheit dazu vorgesehen, in dem Betriebszustand im Fall eines Ausbleibens der Bestätigungs-Bediengeste innerhalb des Bestätigungs-Zeitintervalls die Vorauswahl zu verwerfen und insbesondere in einen Ausgangszustand zurückzukehren. Die Steuereinheit ist insbesondere dazu vorgesehen, in dem Betriebszustand im Fall einer unvollständigen Ausführung der Bestätigungs-Bediengeste innerhalb des Bestätigungs-Zeitintervalls die Vorauswahl zu verwerfen und insbesondere in einen Ausgangszustand zurückzukehren. In dem Ausgangszustand ist die Steuereinheit insbesondere dazu vorgesehen, auf eine Detektion einer Verifikations-Bediengeste zu warten. Unter einer "Bestätigungs-Zeitspanne" soll insbesondere eine Zeitspanne verstanden werden, welche insbesondere zeitlich nach einer getroffenen Vorauswahl angeordnet ist und innerhalb welcher die Steuereinheit insbesondere auf eine Bestätigung, insbesondere durch Ausführung zumindest einer Bestätigungs-Bediengeste, der Vorauswahl wartet und/oder innerhalb welcher eine Bestätigungs-Bediengeste insbesondere vornehmbar ist und/oder vorgenommen werden kann. Insbesondere weist die Bestätigungs-Zeitspanne eine Dauer von mindestens 0,1 s, insbesondere von mindestens 0,2 s, vorteilhaft von mindestens 0,3 s und vorzugsweise von mindestens 0,4 s auf. Die Bestätigungs-Zeitspanne weist insbesondere eine Dauer von maximal 3 s, insbesondere von maximal 1,5 s, vorteilhaft von maximal 1 s und vorzugsweise von maximal 0,7s auf. Beispielsweise könnte eine Dauer der Bestätigungs-Zeitspanne vordefiniert sein. Alternativ oder zusätzlich könnte eine Dauer der Bestätigungs-Zeitspanne insbesondere manuell veränderbar sein, beispielsweise durch eine Bedieneingabe mittels einer Bedienerschnittstelle. Dadurch kann insbesondere ein hohes Maß an Sicherheit erreicht werden.

Die Steuereinheit ist weiterhin dazu vorgesehen, in dem Betriebszustand in Abhängigkeit von zumindest einer Markierungsbewegungs-Bediengeste zumindest eine Markierung über zumindest eine Anzeigefläche zu bewegen. Unter einer "Markierungsbewegungs-Bediengeste" soll insbesondere eine Bediengeste verstanden werden, welche dazu vorgesehen ist, zumindest eine Markierung über zumindest eine Anzeigefläche zu bewegen und welche insbesondere speziell der Bewegung der Markierung zugeordnet ist. Beispielsweise könnte die Markierungsbewegungs-Bediengeste zumindest eine insbesondere vordefinierte, der Bewegung der Markierung zugeordnete Gestalt insbesondere des Körperteils des Bedieners aufweisen. Alternativ oder zusätzlich könnte die Markierungsbewegungs-Bediengeste eine insbesondere vordefinierte, der Bewegung der Markierung zugeordnete Bewegungsrichtung und/oder Bewegungsart und/oder Bewegungsform insbesondere des Körperteils des Bedieners aufweisen. Unter einer "Markierung" soll insbesondere ein auf einer Anzeigefläche angezeigtes Element verstanden werden, welches dazu vorgesehen ist, in dem Betriebszustand eine Position und/oder einen Bereich anzuzeigen und/oder kenntlich zu machen und/oder hervorzuheben. Die Markierung ist insbesondere dazu vorgesehen, eine Position des Körperteils des Bedieners hervorzuheben und/oder kenntlich zu machen. Die Steuereinheit ist insbesondere dazu vorgesehen, in dem Betriebszustand der Bediengeste, insbesondere der Bewegung des Körperteils, mittels der Markierung zu folgen und diese insbesondere über die Anzeigefläche zu bewegen. Die Markierung könnte beispielsweise eine Gestalt eines Ovals und/oder eines Kreises und/oder eines Kreuzes und/oder eines Rechtecks und/oder eines Pfeils und/oder eines Cursors und/oder eines Balkens und/oder einer Säule und/oder eines Hakens annehmen. Alternativ oder zusätzlich könnte die Markierung insbesondere ein Bereich erhöhter Helligkeit und/oder ein durch eine Farbgebung hervorgehobener Bereich und/oder ein blinkender Bereich sein. Die Markierung könnte alternativ oder zusätzlich insbesondere eine Information, insbesondere eine Helligkeitsinformation und/oder eine Farbinformation, sein. Beispielsweise könnte die Steuereinheit dazu vorgesehen sein, in dem Betriebszustand in Abhängigkeit von der Bediengeste zumindest zwei, insbesondere zumindest drei, vorteilhaft zumindest fünf und vorzugsweise mehrere Markierungen über die Anzeigefläche zu bewegen. Insbesondere ist die Steuereinheit dazu vorgesehen, in dem Betriebszustand in Abhängigkeit von der Bediengeste insbesondere genau eine Markierung über die Anzeigefläche zu bewegen. Unter einer "Anzeigefläche" soll insbesondere eine zu einer Anzeige vorgesehene Oberfläche verstanden werden, unterhalb welcher in einer Einbaulage insbesondere zumindest eine Lichtquelle angeordnet ist. Die Lichtquelle könnte beispielsweise eine LED und/oder ein Display und/oder ein LCD-Display und/oder eine Flüssigkeitskristallanzeige und/oder ein OLED und/oder ein Laser sein. Beispielsweise könnte die Anzeigefläche wenigstens teilweise eine Oberfläche einer Bedienerschnittstelle sein. Alternativ oder zusätzlich könnte die Anzeigefläche eine wenigstens teilweise transparente Oberfläche sein, wie beispielsweise eine Oberfläche einer als Kochfeldplatte ausgebildeten Haushaltsgeräteplatte. Insbesondere könnte die Steuereinheit dazu vorgesehen sein, in dem Betriebszustand die Lichtquelle zu aktivieren und insbesondere die Markierung mittels zeitlich aufeinanderfolgender Aktivierung verschiedener, insbesondere benachbarter Stellen der Anzeigefläche über die Anzeigefläche zu bewegen. Dadurch kann insbesondere ein hoher Bedienkomfort erreicht werden. Insbesondere kann einem Bediener Rückmeldung bezüglich der vorgenommenen Bediengeste gegeben werden, wodurch insbesondere ein Erlernen einer Bedienung des Kochfelds mittels Bediengesten vereinfacht werden kann. Ein autodidaktisches Erlernen einer Bedienung des Kochfelds kann insbesondere ermöglicht werden. Insbesondere kann ein Bediener Fehler in einer Bedienung des Kochfelds aufgrund der Markierung erkennen und vorteilhaft korrigieren. Aufgrund einer Möglichkeit, durch die Rückmeldung zumindest in Form der Markierung eine Vielzahl an Bediengesten einfach zu erlernen, kann vorteilhaft eine große Vielfalt an Bediengesten vorgesehen und/oder definiert werden.

Ferner wird vorgeschlagen, dass die Steuereinheit dazu vorgesehen ist, in dem Betriebszustand zumindest eine Verifikations-Routine durchzuführen, um eine Möglichkeit einer Fehlbedienung zu reduzieren. Unter einer "Verifikations-Routine" soll insbesondere zumindest eine von der Steuereinheit durchgeführte Operation verstanden werden, mittels welcher die Steuereinheit insbesondere eine von der Sensoreinheit vorgenommene Detektion analysiert und insbesondere in zumindest zwei Verifikations-Kategorien unterteilt. Eine erste Verifikations-Kategorie könnte beispielsweise für eine insbesondere gültige Bediengeste und eine zweite Verifikations-Kategorie könnte beispielsweise für eine Fehlbedienung vorgesehen sein. Die Steuereinheit könnte insbesondere dazu vorgesehen sein, in dem Betriebszustand bei der Verifikations-Routine ausschließlich in der Speichereinheit der Steuereinheit gespeicherte Bediengesten und/oder vor dem Betriebszustand eindeutig definierte Bediengesten anzunehmen, wodurch insbesondere eine besonders strenge Verifikations-Routine bereitgestellt und/oder eine hohe Sicherheit erreicht werden kann. Alternativ oder zusätzlich könnte die Steuereinheit insbesondere dazu vorgesehen sein, in dem Betriebszustand bei der Verifikations-Routine eine Größe und/oder eine Form des Körperteils des Bedieners zu berücksichtigen, insbesondere um eine von einer unautorisierten Person vorgenommene Bediengeste zu erkennen und insbesondere die von der unautorisierten Person vorgenommene Bediengeste zu ignorieren und/oder unberücksichtigt zu lassen. Insbesondere könnte die Steuereinheit dazu vorgesehen sein, in dem Betriebszustand bei der Verifikations-Routine Erwachsene Personen von Kindern zu unterscheiden und insbesondere eine von einem Kind durchgeführte Bediengeste als ungültige Bediengeste zu erkennen und insbesondere unberücksichtigt zu lassen. Die Steuereinheit könnte alternativ oder zusätzlich insbesondere dazu vorgesehen sein, in dem Betriebszustand bei der Verifikations-Routine ausschließlich registrierte und/oder in der Speichereinheit der Steuereinheit gespeicherte Körperteile von Bedienern zu berücksichtigen. Zu einer Registrierung eines Körperteils eines Bedieners könnte beispielsweise ein Scan des Körperteils vorgesehen sein, wie beispielsweise zumindest einer Handfläche und/oder zumindest eines Fingers. Alternativ oder zusätzlich könnte die Steuereinheit insbesondere dazu vorgesehen sein, in dem Betriebszustand insbesondere in einem Lernprozess eine Vornahme und/oder Durchführung einer Bewegung des Körperteils des Bedieners zu analysieren und insbesondere den Bediener anhand einer Vornahme und/oder Durchführung einer Bewegung zu erkennen. Unter einer "Fehlbedienung" soll insbesondere eine Detektion einer von einer insbesondere gültigen Bediengeste abweichenden Geste und/oder eine Detektion eines Gegenstands und/oder eine Detektion einer ungültigen Bediengeste verstanden werden, welche insbesondere von einer unautorisierten und/oder unberechtigten Person durchgeführt sein könnte. Die von der gültigen Bediengeste abweichende Geste könnte beispielsweise eine Bewegung des Bedieners, insbesondere eines Körperteils des Bedieners, welche insbesondere zu einer Handhabung von Gegenständen und/oder zu einer Bearbeitung von Lebensmitteln dient, sein. Alternativ oder zusätzlich könnte die von der gültigen Bediengeste abweichende Geste eine Alltagsbewegung des Bedieners sein, wie beispielsweise eine während einer Unterhaltung ausgeführte Bewegung. Der Gegenstand könnte beispielsweise ein Geschirr und/oder ein Besteck und/oder ein Gargeschirr und/oder ein Lebensmittel und/oder ein Kleidungsstück sein. Die ungültige Bediengeste könnte beispielsweise eine von einer unberechtigten Person vorgenommene Bediengeste sein. Insbesondere könnte die unberechtigte Person ein Kind und/oder ein Fremder sein. Die unautorisierte Person könnte sich insbesondere von einer autorisierten Person unterscheiden, welche insbesondere registriert und vorteilhaft in der Speichereinheit der Steuereinheit als registrierte Person gespeichert ist. Dadurch können insbesondere besonders strenge Sicherheitsstandards erfüllt und/oder eine Fehlbedienung erfolgreich verhindert werden. Insbesondere können fehlerhafte und/oder ungültige Bediengesten und/oder Gegenstände von insbesondere gültigen Bediengesten unterschieden werden, wodurch insbesondere eine optimal funktionierende und/oder robuste und/oder stabile Gestensteuerung ermöglicht werden kann.

Zudem wird vorgeschlagen, dass die Steuereinheit dazu vorgesehen ist, in dem Betriebszustand die Markierung ausschließlich in Abhängigkeit von vordefinierten Markierungsbewegungs-Bediengesten über die Anzeigefläche zu bewegen. Insbesondere ist die Steuereinheit dazu vorgesehen, in dem Betriebszustand zumindest eine detektierte Bediengeste mit in der Speichereinheit der Steuereinheit gespeicherten Markierungsbewegungs-Bediengesten zu vergleichen und insbesondere ausschließlich bei ausreichender Übereinstimmung zwischen der detektierten Bediengeste und den in der Speichereinheit der Steuereinheit gespeicherten Markierungsbewegungs-Bediengesten die Markierung über die Anzeigefläche zu bewegen. Die Steuereinheit ist insbesondere dazu vorgesehen, in dem Betriebszustand zumindest eine detektierte Bediengeste, welche sich von insbesondere in der Speichereinheit der Steuereinheit gespeicherten Markierungsbewegungs-Bediengesten unterscheidet, unberücksichtigt zu lassen und/oder zu ignorieren und insbesondere eine Bewegung der Markierung über die Anzeigefläche zu unterlassen. Dadurch kann insbesondere eine hohe Sicherheit gewährleistet und/oder eine Verärgerung eines Bedieners über fehlerhaft zugeordnete Gesten vermieden werden.

Weiterhin wird vorgeschlagen, dass die Steuereinheit dazu vorgesehen ist, in dem Betriebszustand ausschließlich in einem Bedienbereich vorgenommene Bediengesten zu berücksichtigen. Insbesondere ist die Steuereinheit dazu vorgesehen, in dem Betriebszustand außerhalb des Bedienbereichs vorgenommene Bediengesten, insbesondere im Fall einer Detektion zumindest einer der außerhalb des Bedienbereichs vorgenommenen Bediengesten, unberücksichtigt zu lassen und/oder zu ignorieren. Unter einem "Bedienbereich" soll insbesondere ein räumlicher Bereich verstanden werden, welcher insbesondere zumindest eine Grundfläche und insbesondere zumindest eine senkrecht zu der Grundfläche ausgerichtete Höhe aufweist und welcher insbesondere zu einer Vornahme und/oder Ausführung zumindest einer insbesondere gültigen Bediengeste vorgesehen ist. Insbesondere weist der Bedienbereich eine Größe auf, welche zumindest durch die Grundfläche und die Höhe definiert ist. Die Grundfläche ist insbesondere in einer wenigstens im Wesentlichen parallel zu der Anzeigefläche ausgerichteten Ebene angeordnet. Der Bedienbereich könnte beispielsweise eine Säule sein und insbesondere einen räumlichen Bereich definieren, welcher sich insbesondere wenigstens im Wesentlichen senkrecht zu einer seitlichen Berandung der Grundfläche in der Vertikalrichtung erstreckt. Alternativ könnte der Bedienbereich zumindest einen Öffnungswinkel aufweisen und insbesondere in Abhängigkeit von der Höhe größer werden. Eine seitliche den Bedienbereich aufspannende Begrenzungsfläche könnte beispielsweise schräg relativ zu der Grundfläche ausgerichtet sein. Insbesondere weist die Grundfläche eine Längserstreckung von mindestens 50 mm, insbesondere von mindestens 70 mm vorteilhaft von mindestens 80 mm, besonders vorteilhaft von mindestens 90 mm und vorzugsweise von mindestens 100 mm auf. Die Grundfläche weist insbesondere eine Längserstreckung von maximal 600 mm, insbesondere von maximal 500 mm vorteilhaft von maximal 400 mm, besonders vorteilhaft von maximal 300 mm und vorzugsweise von maximal 200 mm auf. Insbesondere weist die Grundfläche eine Quererstreckung von mindestens 100 mm, insbesondere von mindestens 130 mm vorteilhaft von mindestens 160 mm, besonders vorteilhaft von mindestens 180 mm und vorzugsweise von mindestens 200 mm auf. Die Grundfläche weist insbesondere eine Quererstreckung von maximal 700 mm, insbesondere von maximal 600 mm vorteilhaft von maximal 500 mm, besonders vorteilhaft von maximal 400 mm und vorzugsweise von maximal 300 mm auf. Die Quererstreckung der Grundfläche ist insbesondere größer als die Längserstreckung der Grundfläche. Die Höhe des Bedienbereichs erstreckt sich insbesondere ausgehend von der Grundfläche in der Vertikalrichtung. Beispielsweise könnte die Größe des Bedienbereichs vordefiniert sein. Alternativ oder zusätzlich könnte die Größe des Bedienbereichs insbesondere manuell veränderbar sein, beispielsweise durch eine Bedieneingabe mittels einer Bedienerschnittstelle. Die Größe des Bedienbereichs könnte alternativ oder zusätzlich insbesondere abhängig von einer Größe der Anzeigefläche und/oder von einer Größe der als Kochfeldplatte ausgebildeten Haushaltsgeräteplatte, und/oder von jeweiligen Gegebenheiten eines Kochfelds und vorteilhaft eines Induktionskochfelds, sein. Dadurch kann ein Bediener insbesondere in einem von dem Bedienbereich abweichenden Bereich bedenkenlos agieren. Insbesondere kann ein Detektionsbereich der Sensoreinheit auf den Bedienbereich beschränkt werden, wodurch insbesondere geringe Kosten erzielt werden können.

Ferner wird vorgeschlagen, dass die Steuereinheit dazu vorgesehen ist, in dem Betriebszustand eine Bediengeste ausschließlich in Abhängigkeit einer zuvor erkannten Verifikations-Bediengeste zu berücksichtigen. Unter einer "Verifikations-Bediengeste" soll insbesondere eine Bediengeste verstanden werden, welche sich insbesondere von einer Fehlbedienung unterscheidet und welche insbesondere zu einer Kenntlichmachung einer Bedien-Absicht vorgesehen ist und in Abhängigkeit welcher die Steuereinheit insbesondere einen Bedienmodus einleitet und/oder startet. Der Bedienmodus ist insbesondere ein Modus, in welchem die Steuereinheit insbesondere in Abhängigkeit von zumindest einer gültigen Bediengeste zumindest eine Aktion ausführt und/oder einleitet. Beispielsweise könnte die Verifikations-Bediengeste zumindest eine insbesondere vordefinierte, der Verifikation zugeordnete Gestalt insbesondere des Körperteils des Bedieners aufweisen. Alternativ oder zusätzlich könnte die Verifikations-Bediengeste eine insbesondere vordefinierte, der Bewegung der Verifikation zugeordnete Bewegungsrichtung und/oder Bewegungsart und/oder Bewegungsform insbesondere des Körperteils des Bedieners aufweisen. Eine Detektion und/oder eine Erkennung der Verifikations-Bediengeste erfolgt insbesondere zeitlich vor einer Detektion und/oder einer Erkennung der Bediengeste. Die Verifikations-Bediengeste könnte insbesondere eine Gestalt einer offenen Hand annehmen. Dadurch kann insbesondere ein besonders sicheres Gestenbedien-System geschaffen werden.

Die Steuereinheit ist insbesondere dazu vorgesehen, in dem Betriebszustand in Abhängigkeit von einer insbesondere erstmaligen Detektion einer Bediengeste, insbesondere einer Verifikations-Bediengeste, eine vordefinierte Verifikations-Zeitspanne zu starten. Vorzugsweise ist die Steuereinheit dazu vorgesehen, in dem Betriebszustand eine Bediengeste ausschließlich in Abhängigkeit einer zuvor erkannten und über eine vordefinierte Verifikations-Zeitspanne gehaltenen Verifikations-Bediengeste zu berücksichtigen. Insbesondere ist die Steuereinheit dazu vorgesehen, in dem Betriebszustand eine Bediengeste ausschließlich in Abhängigkeit einer über mindestens 80 %, insbesondere über mindestens 85 %, vorteilhaft über mindestens 90 % und vorzugsweise über mindestens 95 % der Verifikations-Zeitspanne wenigstens im Wesentlichen konstant ausgeführten Verifikations-Bediengeste zu berücksichtigen. Die Steuereinheit ist insbesondere dazu vorgesehen, in dem Betriebszustand Toleranzen bezüglich eines Haltens der Verifikations-Bediengeste zu berücksichtigen. Eine Toleranz in dem Halten der Verifikations-Bediengeste könnte beispielsweise eine insbesondere leichte Zitterbewegung sein, wie beispielsweise bei einem unruhigen und/oder erkrankten Bediener. Unter einer "Verifikations-Zeitspanne" soll insbesondere eine Zeitspanne verstanden werden, welche einer Bedienung mittels der Bediengeste zeitlich vorgeschaltet ist und innerhalb welcher die Steuereinheit insbesondere die Verifikations-Routine ausführt. Insbesondere weist die Verifikations-Zeitspanne eine Dauer von mindestens 0,2 s, insbesondere von mindestens 0,3 s, vorteilhaft von mindestens 0,4 s und vorzugsweise von mindestens 0,5 s auf. Die Verifikations-Zeitspanne weist insbesondere eine Dauer von maximal 5 s, insbesondere von maximal 3 s, vorteilhaft von maximal 2 s und vorzugsweise von maximal 1,5 s auf. Dadurch können insbesondere besonders strenge Voraussetzungen zu einer Berücksichtigung der Bediengeste geschaffen werden, wodurch insbesondere ein hohes Maß an Komfort für einen Bediener aufgrund einer geringen Anzahl an Fehlbedienungen ermöglicht werden kann.

Weiterhin wird vorgeschlagen, dass die Steuereinheit dazu vorgesehen ist, in dem Betriebszustand in Abhängigkeit einer Position der Markierung eine Vorauswahl zu treffen und auf eine insbesondere durch zumindest eine Bestätigungs-Bediengeste vorgenommene Bestätigung der Vorauswahl zu warten. Unter einer "Vorauswahl" eines Objekts und/oder einer Aktion soll insbesondere eine Anwahl des Objekts und/oder der Aktion aus einer Gruppe von Objekten und/oder Aktionen mit dem Ziel einer Auswahl des angewählten Objekts und/oder der angewählten Aktion verstanden werden. Die Vorauswahl des Objekts und/oder der Aktion ist insbesondere eine bevorzugte Stellung des vorausgewählten Objekts und/oder der vorausgewählten Aktion gegenüber gleichartigen Objekten und/oder Aktionen. Die Steuereinheit ist weiterhin dazu vorgesehen, in dem Betriebszustand die Vorauswahl für eine nachfolgende Bestätigung vorzumerken. Beispielsweise könnte die Anzeigefläche zu einer Anzeige eines Menüs und die Steuereinheit dazu vorgesehen sein, in dem Betriebszustand die Markierung auf einen bestimmten Menüpunkt des Menüs, welches zumindest zwei Menüpunkte aufweisen könnte, über die Anzeigefläche zu bewegen. Insbesondere könnte die Vorauswahl der aus den Menüpunkten insbesondere von einem Bediener angewählte bestimmte Menüpunkt sein. Dadurch kann insbesondere ein hoher Bedienkomfort und/oder eine schnelle Ausführung der Vorauswahl im Fall einer Bestätigung der Vorauswahl erzielt werden.

Ferner wird vorgeschlagen, dass die Steuereinheit dazu vorgesehen ist, in dem Betriebszustand eine Gestalt und/oder eine Farbe der Markierung zu verändern, insbesondere um zumindest eine Information insbesondere einem Bediener anzuzeigen. Insbesondere ist die Steuereinheit dazu vorgesehen, in dem Betriebszustand eine Gestalt der Markierung in Abhängigkeit einer Gestalt des Körperteils, insbesondere der Hand, des Bedieners zu verändern. Die Steuereinheit könnte beispielsweise dazu vorgesehen sein, in dem Betriebszustand eine Gestalt der Markierung in Abhängigkeit einer Gestalt des Körperteils des Bedieners zu verändern. Beispielsweise könnte die Steuereinheit dazu vorgesehen sein, in dem Betriebszustand in Abhängigkeit von einer zu einer Faust geformten Hand eine erste Gestalt der Markierung und in Abhängigkeit von einer geöffneten Hand eine zweite Gestalt der Markierung anzuzeigen und/oder zu verwenden. Alternativ oder zusätzlich könnte die Steuereinheit dazu vorgesehen sein, in dem Betriebszustand eine Gestalt der Markierung in Abhängigkeit einer Bewegungsrichtung des Körperteils des Bedieners zu verändern. Beispielsweise könnte die Steuereinheit dazu vorgesehen sein, in dem Betriebszustand in Abhängigkeit von einer wenigstens im Wesentlichen parallel zu der Anzeigefläche ausgeführten Bedienbewegung eine erste Gestalt, beispielsweise in Form eines Kreuzes, anzuzeigen und/oder zu verwenden. Die Steuereinheit könnte beispielsweise dazu vorgesehen sein, in dem Betriebszustand in Abhängigkeit von einer insbesondere bezüglich einer Vertikalrichtung von der Anzeigefläche weggerichteten Bedienbewegung eine erste Gestalt, beispielsweise in Form eines Pfeils nach oben, und/oder in Abhängigkeit von einer insbesondere bezüglich der Vertikalrichtung auf die Anzeigefläche zugerichteten Bedienbewegung eine zweite Gestalt, beispielsweise in Form eines Pfeils nach unten, anzuzeigen und/oder zu verwenden. Die Steuereinheit könnte beispielsweise dazu vorgesehen sein, in dem Betriebszustand in Abhängigkeit von einer erreichten maximalen und/oder minimalen Betriebsparameterwerts, wie beispielsweise einer Heiz-Intensität, eine zweite Markierung, insbesondere in Form eines von einem Kreis umgebenen Kreuzes, anzuzeigen und/oder zu verwenden. Die Steuereinheit könnte beispielsweise dazu vorgesehen sein, in dem Betriebszustand eine Farbe der Markierung in Abhängigkeit einer ausgeführten Bediengeste zu verändern. Beispielsweise könnte die Steuereinheit dazu vorgesehen sein, in dem Betriebszustand in Abhängigkeit von der Markierungsbewegungs-Bediengeste eine erste Farbe, wie beispielsweise schwarz, und/oder in Abhängigkeit von der Bestätigungs-Bediengeste eine zweite, sich von der ersten Farbe unterscheidenden Farbe, wie beispielsweise grün, anzuzeigen und/oder zu verwenden. Die Steuereinheit könnte beispielsweise dazu vorgesehen sein, in dem Betriebszustand in Abhängigkeit von einer ungültigen und/oder unvollständig ausgeführten Bediengeste eine weitere Farbe, wie beispielsweise rot, anzuzeigen und/oder zu verwenden. Unter einer "offenen" und/oder "geöffneten" Hand soll insbesondere eine Hand mit gespreizt angeordneten Fingern verstanden werden, welche insbesondere kontaktlos und/oder beabstandet, insbesondere maximal beabstandet, relativ zueinander angeordnet sind. Unter einer "geschlossenen" Hand soll insbesondere eine Hand mit aneinander anliegenden Fingern verstanden werden, welche insbesondere in direktem Kontakt und/oder unbeabstandet relativ zueinander angeordnet sind. Dadurch kann insbesondere eine hohe Flexibilität und/oder eine Vielzahl an möglichen Rückmeldungen an einen Bediener erzielt werden, wodurch insbesondere ein besonders hoher Bedienkomfort bereitgestellt werden kann.

Ein besonders hoher Bedienkomfort kann erreicht werden durch ein erfindungsgemäßes Kochfeld und vorteilhaft durch ein Induktionskochfeld.

Der Bedienkomfort kann weiter gesteigert werden durch ein Verfahren mit einem erfindungsgemäßen Kochfeld, bei dem in wenigstens einem Betriebszustand wenigstens eine Bediengeste eines Bedieners detektiert und in dem Betriebszustand auf Basis der detektierten Bediengeste wenigstens eine Aktion ausgeführt und/oder eingeleitet wird. In dem Betriebszustand wird in Abhängigkeit von zumindest einer Bestätigungs-Bediengeste zumindest eine Vorauswahl angenommen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Ber

Es zeigen:
- Fig. 1: ein Kochfeld in einem deaktivierten Zustand in einer schematischen perspektivischen Darstellung,
- Fig. 2: einen vergrößerten Ausschnitt aus Figur 1 in einer schematischen Draufsicht,
- Fig. 3: eine Bedienerschnittstelle des Kochfelds und eine Anzeigefläche des Kochfelds, auf welcher eine Markierung in einem Ausgangszustand angeordnet ist, in einem Betriebszustand in einer schematischen Draufsicht,
- Fig. 4: die Bedienerschnittstelle, die Anzeigefläche, auf welcher die Markierung in dem Ausgangszustand angeordnet ist, und ein Körperteil eines Bedieners, welches eine Verifikations-Bediengeste annimmt,
- Fig. 5: die Bedienerschnittstelle, die Anzeigefläche, auf welcher die Markierung in einer ersten Stellung angeordnet ist, und das Körperteil des Bedieners, welches eine Markierungsbewegungs-Bediengeste annimmt, in dem Betriebszustand in einer schematischen Draufsicht,
- Fig. 6: die Bedienerschnittstelle, die Anzeigefläche, auf welcher die Markierung in einer zweiten Stellung angeordnet ist, und das Körperteil des Bedieners, welches die Markierungsbewegungs-Bediengeste annimmt, in dem Betriebszustand in einer schematischen Draufsicht,
- Fig. 7: die Bedienerschnittstelle, die Anzeigefläche, auf welcher die Markierung in einer dritten Stellung angeordnet ist, und das Körperteil des Bedieners, welches die Markierungsbewegungs-Bediengeste annimmt, in dem Betriebszustand in einer schematischen Draufsicht,
- Fig. 8: die Bedienerschnittstelle, die Anzeigefläche, auf welcher die Markierung in der dritten Stellung angeordnet ist, und das Körperteil des Bedieners, welches einen ersten Teil einer Bestätigungs-Bediengeste annimmt, in dem Betriebszustand in einer schematischen Draufsicht,
- Fig. 9: die Bedienerschnittstelle, die Anzeigefläche, auf welcher die Markierung in der dritten Stellung angeordnet ist, und das Körperteil des Bedieners, welches einen zweiten Teil der Bestätigungs-Bediengeste annimmt, in dem Betriebszustand in einer schematischen Draufsicht,
- Fig. 10: ein Diagramm eines Verfahrens mit dem Kochfeld in einer schematischen Darstellung,
- Fig. 11: eine alternative Markierungsbewegungs-Bediengeste in einer schematischen perspektivischen Darstellung,
- Fig. 12: einen ersten Teil einer alternativen Bestätigungs-Bediengeste in einer schematischen perspektivischen Darstellung,
- Fig. 13: einen zweiten Teil der alternativen Bestätigungs-Bediengeste in einer schematischen perspektivischen Darstellung,
- Fig. 14: eine alternative Markierungsbewegungs-Bediengeste in einer schematischen perspektivischen Darstellung,
- Fig. 15: einen ersten Teil einer alternativen Bestätigungs-Bediengeste in einer schematischen perspektivischen Darstellung und
- Fig. 16: einen zweiten Teil der alternativen Bestätigungs-Bediengeste in einer schematischen perspektivischen Darstellung.

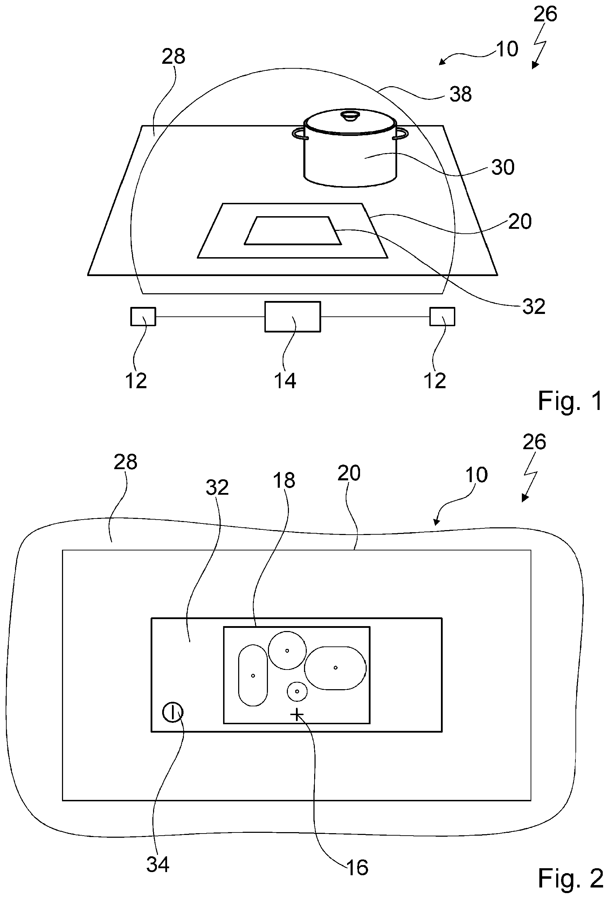

Fig. 1 zeigt ein Haushaltsgerät 26, das als ein Kochfeld ausgebildet ist, mit einer Haushaltsgerätevorrichtung 10, die als eine Kochfeldvorrichtung ausgebildet ist. Das Haushaltsgerät 26 ist als ein Induktionskochfeld ausgebildet. Die Haushaltsgerätevorrichtung 10 ist als eine Induktionskochfeldvorrichtung ausgebildet.

Die Haushaltsgerätevorrichtung 10 weist eine Haushaltsgeräteplatte 28 auf. Die Haushaltsgeräteplatte 28 ist als eine Kochfeldplatte ausgebildet. In einem montierten Zustand bildet die Haushaltsgeräteplatte 28 einen Teil eines Haushaltsgerätegehäuses, insbesondere eines Kochfeldaußengehäuses, aus. Die Haushaltsgeräteplatte 28 ist zu einem Aufstellen von Gargeschirr 30 vorgesehen.

Die Haushaltsgerätevorrichtung 10 weist mehrere Heizeinheiten (nicht dargestellt) auf. Die Heizeinheiten sind als Induktionsheizeinheiten ausgebildet. Die Heizeinheiten sind in Form einer Matrix angeordnet. Alternativ könnten die Heizeinheiten insbesondere Teil eines klassischen Kochfelds sein, bei welchem insbesondere durch eine Position der Heizeinheiten definierte, fest vorgegebene Heizzonen existieren könnten, welche insbesondere auf der Kochfeldplatte markiert sein könnten. Die Heizeinheiten sind dazu vorgesehen, auf der Haushaltsgeräteplatte 28 oberhalb der Heizeinheiten aufgestelltes Gargeschirr 30 zu erhitzen.

Die Haushaltsgerätevorrichtung 10 weist eine Bedienerschnittstelle 32 zu einer Eingabe und/oder Auswahl von Betriebsparametern auf, beispielsweise einer Heizleistung und/oder einer Heizleistungsdichte und/oder einer Heizzone. Die Bedienerschnittstelle 32 weist zumindest ein Bedienelement (nicht dargestellt) zu der Eingabe und/oder Auswahl von Betriebsparametern auf. Im vorliegenden Ausführungsbeispiel weist die Bedienerschnittstelle 32 mehrere Bedienelemente auf. Die Bedienerschnittstelle 32 weist einen Hauptschalter 34 auf. Der Hauptschalter 34 ist zu einer Aktivierung eines Betriebszustands vorgesehen.

Die Haushaltsgerätevorrichtung 10 weist eine Anzeigefläche 18 auf. Die Anzeigefläche 18 ist Teil der Bedienerschnittstelle 32. Die Bedienerschnittstelle 32 ist zu einer Ausgabe eines Werts eines Betriebsparameters an einen Bediener vorgesehen.

Die Haushaltsgerätevorrichtung 10 weist eine Steuereinheit 14 auf. Die Steuereinheit 14 ist dazu vorgesehen, in Abhängigkeit von mittels der Bedienerschnittstelle 32 eingegebenen Betriebsparametern Aktionen auszuführen und/oder Einstellungen zu verändern. Die Steuereinheit 14 regelt in dem Betriebszustand eine Energiezufuhr zu den Heizeinheiten. In einer Einbaulage ist die Steuereinheit 14 unterhalb der Haushaltsgeräteplatte 28 angeordnet.

Die Haushaltsgerätevorrichtung 10 weist eine Sensoreinheit 12 auf. In der Einbaulage ist die Sensoreinheit 12 unterhalb der Haushaltsgeräteplatte 28 angeordnet. Die Sensoreinheit 12 weist einen Detektionsbereich 38 auf (vgl. Fig. 1). Der Detektionsbereich 38 erstreckt sich in der Einbaulage bezüglich einer Vertikalrichtung oberhalb der Sensoreinheit 12. In dem Betriebszustand detektiert die Sensoreinheit 12 eine Vielzahl an Signalen. Die Sensoreinheit 12 übermittelt detektierte Signale an die Steuereinheit 14.

Die Sensoreinheit 12 ist dazu vorgesehen, in dem Betriebszustand Bediengesten eines Bedieners zu detektieren. Die Sensoreinheit 12 detektiert in dem Betriebszustand in dem Detektionsbereich 38 vorgenommene Bediengesten. In dem Betriebszustand übermittelt die Sensoreinheit 12 detektierte Bediengesten an die Steuereinheit 14. Die Steuereinheit 14 ist dazu vorgesehen, in dem Betriebszustand auf Basis der durch die Sensoreinheit 12 detektierten Bediengesten Aktionen auszuführen und/oder einzuleiten.

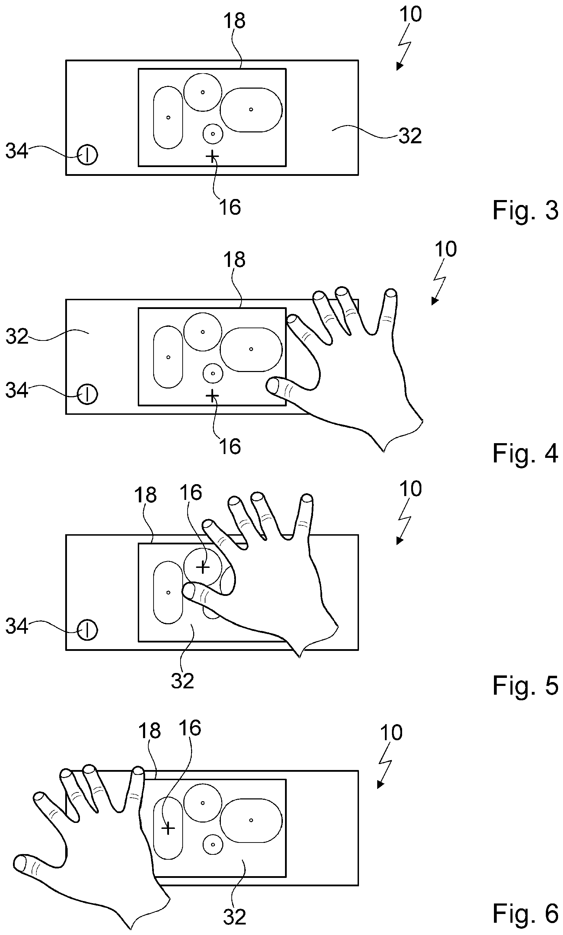

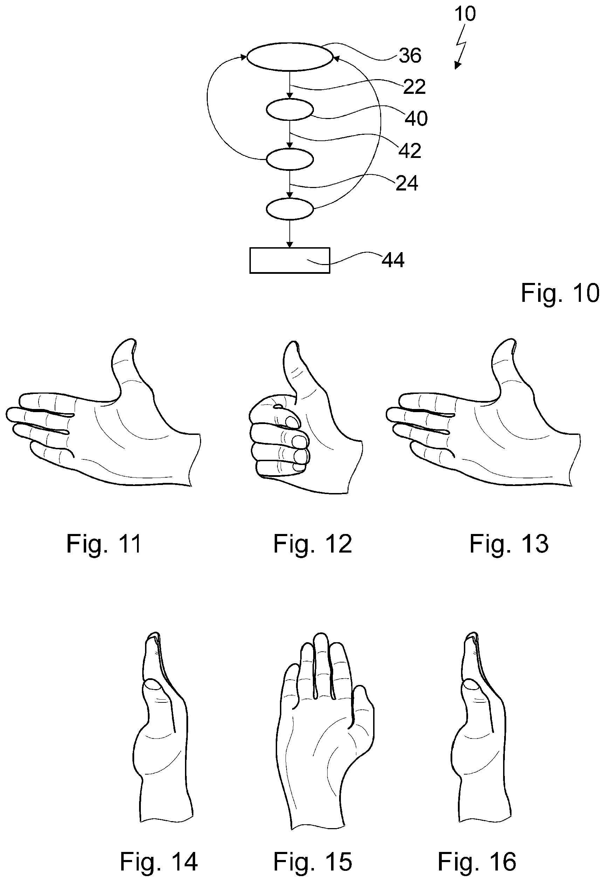

In einem Verfahren mit der Haushaltsgerätevorrichtung 10 startet die Steuereinheit 14 in dem Betriebszustand im Anschluss an eine Betätigung des Hauptschalters 34 einen Ausgangszustand 36 (vgl. Fig. 3 und 10). In dem Ausgangszustand 36 wartet die Steuereinheit 14 in dem Betriebszustand auf von der Sensoreinheit 12 detektierte Bediengesten.

Die Steuereinheit 14 weist eine Speichereinheit (nicht dargestellt) auf. In der Speichereinheit ist ein Bedienbereich 20 gespeichert (vgl. Fig. 1 und 2). In dem Betriebszustand berücksichtigt die Steuereinheit 14 ausschließlich in dem Bedienbereich 20 vorgenommene Bediengesten. Der Bedienbereich 20 ist kleiner als der Detektionsbereich 38. Die Steuereinheit 14 ignoriert in dem Betriebszustand außerhalb des Bedienbereichs 20 vorgenommene Bediengesten.

In dem Betriebszustand führt die Steuereinheit 14 eine Verifikations-Routine durch, um eine Möglichkeit einer Fehlbedienung zu reduzieren. Die Steuereinheit 14 führt die Verifikations-Routine innerhalb einer Verifikations-Zeitspanne 22 durch (vgl. Fig. 10). Die Verifikations-Zeitspanne 22 ist in der Speichereinheit der Steuereinheit 14 gespeichert. Die Verifikations-Zeitspanne 22 weist im vorliegenden Ausführungsbeispiel eine vordefinierte Dauer auf.

In dem Betriebszustand berücksichtigt die Steuereinheit 14 eine Bediengeste ausschließlich in Abhängigkeit einer zuvor erkannten Verifikations-Bediengeste (vgl. Fig. 4). Im vorliegenden Ausführungsbeispiel ist die Verifikations-Bediengeste eine offene Hand, welche im Wesentlichen parallel zu der Anzeigefläche 18 ausgerichtet ist. Die Steuereinheit 14 berücksichtigt in dem Betriebszustand eine Bediengeste ausschließlich in Abhängigkeit einer zuvor erkannten und über die vordefinierte Verifikations-Zeitspanne 22 gehaltenen Verifikations-Bediengeste.

In Abhängigkeit einer lediglich über einen Teil der vordefinierten Verifikations-Zeitspanne 22 gehaltenen Verifikations-Bediengeste ignoriert die Steuereinheit 14 in dem Betriebszustand nachfolgende Bediengesten. Die Steuereinheit 14 kehrt in dem Betriebszustand in Abhängigkeit einer lediglich über einen Teil der vordefinierten Verifikations-Zeitspanne 22 gehaltenen Verifikations-Bediengeste in den Ausgangszustand 36 zurück.

In dem Betriebszustand geht die Steuereinheit 14 in Abhängigkeit einer über die vordefinierte Verifikations-Zeitspanne 22 gehaltenen Verifikations-Bediengeste in einen Startzustand 40 über (vgl. Fig. 10). In dem Startzustand 40 wartet die Steuereinheit 14 in dem Betriebszustand innerhalb einer Bedieneingabe-Zeitspanne 42 auf eine Bediengeste. Die Bedieneingabe-Zeitspanne 42 weist im vorliegenden Ausführungsbeispiel eine unbegrenzte Dauer auf.

Die Steuereinheit 14 bewegt in dem Betriebszustand in Abhängigkeit von einer Markierungsbewegungs-Bediengeste eine Markierung 16 über die Anzeigefläche 18 (vgl. Fig. 5 bis 7). Im vorliegenden Ausführungsbeispiel sind auf der Anzeigefläche 18 mehrere Heizzonen dargestellt. In dem Betriebszustand markiert die Steuereinheit 14 mittels der Markierung 16 in Abhängigkeit von vordefinierten Markierungsbewegungs-Bediengesten verschiedene der Heizzonen.

In dem Betriebszustand bewegt die Steuereinheit 14 die Markierung 16 ausschließlich in Abhängigkeit von vordefinierten Markierungsbewegungs-Bediengesten über die Anzeigefläche 18. Die Markierungsbewegungs-Bediengesten sind in der Speichereinheit der Steuereinheit 14 gespeichert. Eine der Markierungsbewegungs-Bediengesten ist im vorliegenden Ausführungsbeispiel eine offene Hand, welche im Wesentlichen parallel zu der Anzeigefläche 18 ausgerichtet ist.

Eine alternative weitere Markierungsbewegungs-Bediengeste könnte beispielsweise eine geschlossene Hand mit abgespreiztem Daumen sein (vgl. Fig. 11). Der Daumen könnte insbesondere wenigstens im Wesentlichen senkrecht zu einer jeweiligen Längserstreckungsrichtung der weiteren Finger und insbesondere wenigstens im Wesentlichen parallel zu einer Haupterstreckungsebene der Handfläche ausgerichtet sein.

Eine alternative weitere Markierungsbewegungs-Bediengeste könnte beispielsweise eine geschlossene Hand mit anliegendem Daumen sein, welche wenigstens im Wesentlichen senkrecht zu der Anzeigefläche ausgerichtet sein könnte (vgl. Fig. 14).

Die Steuereinheit 14 trifft in dem Betriebszustand in Abhängigkeit einer Position der Markierung 16 eine Vorauswahl. In Fig. 5 bis 7 ist jeweils eine andere Heizzone vorausgewählt. Die Steuereinheit 14 ordnet in dem Betriebszustand einer mittels der Position der Markierung 16 markierten Heizzone einen Status als Vorauswahl zu.

In Abhängigkeit einer getroffenen Vorauswahl wartet die Steuereinheit 14 in dem Betriebszustand auf eine erneute Markierungsbewegungs-Bediengeste oder auf eine Bestätigungs-Bediengeste. Die Bestätigungs-Bediengeste ist zu einer Bestätigung einer getroffenen Vorauswahl vorgesehen.

Die Steuereinheit 14 bewegt in dem Betriebszustand in Abhängigkeit von einer erneuten Markierungsbewegungs-Bediengeste die Markierung 16 über die Anzeigefläche 18. In Abhängigkeit von einer erneuten Markierungsbewegungs-Bediengeste bewegt die Steuereinheit 14 die Markierung 16 an eine weitere Position. Die Steuereinheit 14 trifft in dem Betriebszustand in Abhängigkeit der weiteren Position der Markierung 16 eine weitere Vorauswahl. Diese Vorgehensweise ist in Fig. 5 bis 7 veranschaulicht.

In dem Betriebszustand nimmt die Steuereinheit 14 in Abhängigkeit von Bestätigungs-Bediengesten eine getroffene Vorauswahl an. In dem Betriebszustand nimmt die Steuereinheit 14 die getroffene Vorauswahl ausschließlich in Abhängigkeit von vordefinierten Bestätigungs-Bediengesten an. Die Bestätigungs-Bediengesten sind in der Speichereinheit der Steuereinheit 14 gespeichert. Im vorliegenden Ausführungsbeispiel ist eine der Bestätigungs-Bediengesten zweiteilig ausgebildet. In der Speichereinheit der Steuereinheit 14 sind zusätzlich einteilige Bestätigungs-Bediengesten und weitere zweiteilige Bestätigungs-Bediengesten gespeichert.

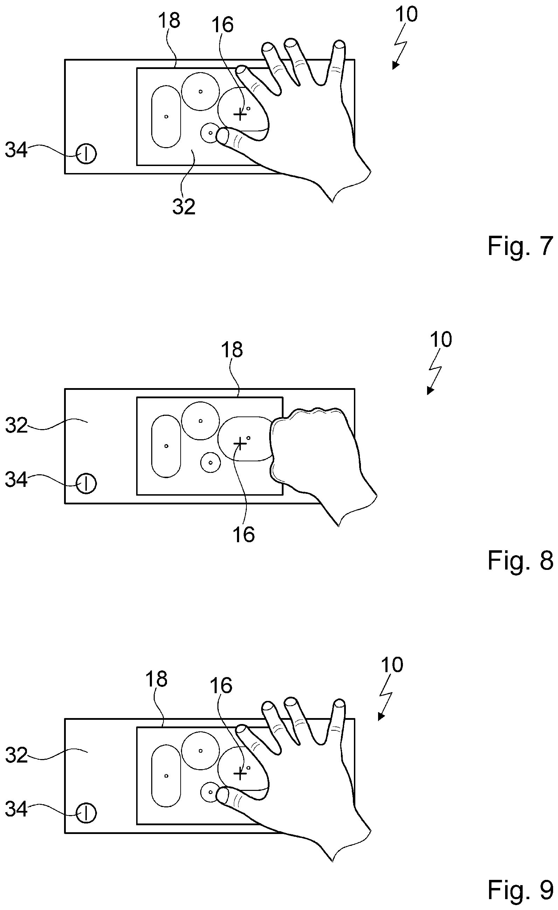

Die Steuereinheit 14 startet in Abhängigkeit von einem ersten Teil der Bestätigungs-Bediengeste eine Bestätigungs-Zeitspanne 24 (vgl. Fig. 10). Der erste Teil der Bestätigungs-Bediengeste ist im vorliegenden Ausführungsbeispiel eine geschlossene Faust (vgl. Fig. 8). Eine Handfläche ist im Fall des ersten Teils der Bestätigungs-Bediengeste im Wesentlichen parallel zu der Anzeigefläche 18 ausgerichtet. Alle Finger einer Hand des Bedieners sind im Fall des ersten Teils der Bestätigungs-Bediengeste insbesondere maximal gebeugt und bilden im vorliegenden Ausführungsbeispiel die Faust aus.

In dem Betriebszustand nimmt die Steuereinheit 14 die getroffene Vorauswahl ausschließlich in Abhängigkeit von vordefinierten und innerhalb der vordefinierten Bestätigungs-Zeitspanne 24 durchgeführten Bestätigungs-Bediengesten an. Die Steuereinheit 14 nimmt die getroffene Vorauswahl ausschließlich in Abhängigkeit von vordefinierten und innerhalb der vordefinierten Bestätigungs-Zeitspanne 24 vollständig abgeschlossenen Bestätigungs-Bediengesten an. Im vorliegenden Ausführungsbeispiel nimmt die Steuereinheit 14 die getroffene Vorauswahl ausschließlich in Abhängigkeit des ersten Teils der Bestätigungs-Bediengeste und eines zweiten Teils der Bestätigungs-Bediengeste an (vgl. Fig. 8 und 9).

Der zweite Teil der Bestätigungs-Bediengeste ist im vorliegenden Ausführungsbeispiel eine offene Hand, welche im Wesentlichen parallel zu der Anzeigefläche 18 ausgerichtet ist (vgl. Fig. 9).

Eine alternative weitere Bestätigungs-Bediengeste könnte beispielsweise einen ersten Teil und einen zweiten Teil aufweisen. Der erste Teil der weiteren Bestätigungs-Bediengeste könnte beispielsweise eine geschlossene Faust mit abgespreiztem Daumen sein (vgl. Fig. 12). Der zweite Teil der weiteren Bestätigungs-Bediengeste könnte eine geschlossene Hand mit abgespreiztem Daumen sein (vgl. Fig. 13). Der Daumen könnte insbesondere wenigstens im Wesentlichen senkrecht zu einer jeweiligen Längserstreckungsrichtung der weiteren Finger und insbesondere wenigstens im Wesentlichen parallel zu einer Haupterstreckungsebene der Handfläche ausgerichtet sein.

Eine alternative weitere Bestätigungs-Bediengeste könnte beispielsweise einen ersten Teil und einen zweiten Teil aufweisen. Der erste Teil der weiteren Bestätigungs-Bediengeste könnte beispielsweise eine geschlossene Hand mit anliegendem Daumen sein, welche wenigstens im Wesentlichen parallel zu der Anzeigefläche ausgerichtet sein könnte (vgl. Fig. 15). Der zweite Teil der weiteren Bestätigungs-Bediengeste könnte eine geschlossene Hand mit anliegendem Daumen sein, welche wenigstens im Wesentlichen senkrecht zu der Anzeigefläche ausgerichtet sein könnte (vgl. Fig. 16).

In Abhängigkeit von vordefinierten und innerhalb der vordefinierten Bestätigungs-Zeitspanne 24 durchgeführten Bestätigungs-Bediengesten startet die Steuereinheit 14 in dem Betriebszustand einen Ausführungszustand 44 (vgl. Fig. 10). In dem Ausführungszustand 44 führt die Steuereinheit 14 in dem Betriebszustand der angenommenen Vorauswahl zugeordnete Aktionen aus oder leitet der angenommenen Vorauswahl zugeordnete Aktionen ein.

In dem Betriebszustand geht die Steuereinheit 14 in Abhängigkeit von vordefinierten und innerhalb der vordefinierten Bestätigungs-Zeitspanne 24 unvollständig durchgeführten Bestätigungs-Bediengesten in den Ausgangszustand 36 zurück. In dem Ausgangszustand 36 ordnet die Steuereinheit 14 in dem Betriebszustand die Markierung 16 in einer Markierungs-Ausgangsposition an.

Die Steuereinheit 14 verändert in dem Betriebszustand eine Farbe der Markierung 16. In dem Betriebszustand verwendet die Steuereinheit 14 in Abhängigkeit von der Markierungsbewegungs-Bediengeste eine erste Farbe für die Markierung 16. Die erste Farbe ist im vorliegenden Ausführungsbeispiel schwarz. In Abhängigkeit von vordefinierten und innerhalb der vordefinierten Bestätigungs-Zeitspanne 24 durchgeführten Bestätigungs-Bediengesten verwendet die Steuereinheit 14 in dem Betriebszustand eine zweite sich von der ersten Farbe unterscheidende Farbe für die Markierung 16. Die zweite Farbe ist im vorliegenden Ausführungsbeispiel grün.

Die Steuereinheit 14 verändert in dem Betriebszustand eine Gestalt der Markierung 16 (vgl. Fig. 5 bis 7 und 9). In dem Betriebszustand verwendet die Steuereinheit 14 in Abhängigkeit von der Markierungsbewegungs-Bediengeste eine erste Gestalt für die Markierung 16 (vgl. Fig. 5 bis 7). Die erste Gestalt ist im vorliegenden Ausführungsbeispiel ein Kreuz. In Abhängigkeit von vordefinierten und innerhalb der vordefinierten Bestätigungs-Zeitspanne 24 durchgeführten Bestätigungs-Bediengesten verwendet die Steuereinheit 14 in dem Betriebszustand eine zweite sich von der ersten Gestalt unterscheidende Gestalt für die Markierung 16 (vgl. Fig. 9). Die zweite Gestalt ist im vorliegenden Ausführungsbeispiel ein Haken.

In dem Verfahren mit der Haushaltsgerätevorrichtung 10 werden in dem Betriebszustand Bediengesten eines Bedieners detektiert. In dem Betriebszustand wird auf Basis der detektierten Bediengesten wenigstens eine Aktion ausgeführt und/oder eingeleitet. In dem Betriebszustand wird in Abhängigkeit von Markierungsbewegungs-Bediengesten die Markierung 16 über die Anzeigefläche 18 bewegt. In Abhängigkeit von Bestätigungs-Bediengesten wird in dem Betriebszustand eine getroffene Vorauswahl angenommen.

### Bezugszeichen

- 10: Haushaltsgerätevorrichtung
- 12: Sensoreinheit
- 14: Steuereinheit
- 16: Markierung
- 18: Anzeigefläche
- 20: Bedienbereich
- 22: Verifikations-Zeitspanne
- 24: Bestätigungs-Zeitspanne
- 26: Haushaltsgerät in Form eines Kochfelds
- 28: Haushaltsgeräteplatte
- 30: Gargeschirr
- 32: Bedienerschnittstelle
- 34: Hauptschalter
- 36: Ausgangszustand
- 38: Detektionsbereich
- 40: Startzustand
- 42: Bedieneingabe-Zeitspanne
- 44: Ausführungszustand

## Patentansprüche

1. Kochfeld mit einer Kochfeldvorrichtung aufweisend eine Anzeigefläche (18), eine Sensoreinheit (12), die dazu vorgesehen ist, in wenigstens einem Betriebszustand wenigstens eine Bediengeste eines Bedieners zu detektieren, und eine Steuereinheit (14), die dazu vorgesehen ist, in dem Betriebszustand auf Basis der durch die Sensoreinheit (12) detektierten Bediengeste wenigstens eine Aktion auszuführen und/oder einzuleiten,
**dadurch gekennzeichnet dass**, die Steuereinheit (14) dazu vorgesehen ist, in dem Betriebszustand in Abhängigkeit von zumindest einer Markierungsbewegungs-Bediengeste zumindest eine Markierung (16) über zumindest die Anzeigefläche (18) zu bewegen, wobei die Steuereinheit (14) dazu vorgesehen ist, in dem Betriebszustand in Abhängigkeit einer Position der Markierung (16) eine Vorauswahl zu treffen, wobei die Steuereinheit (14) dazu vorgesehen ist, in dem Betriebszustand in Abhängigkeit von zumindest einer Bestätigungs-Bediengeste zumindest die Vorauswahl, welche eine Anwahl eines Objekts und/oder der Aktion aus einer Gruppe von Objekten und/oder Aktionen mit dem Ziel einer Auswahl des angewählten Objekts und/oder der angewählten Aktion ist, anzunehmen, wobei die Steuereinheit (14) dazu vorgesehen ist, in dem Betriebszustand die Vorauswahl für eine nachfolgende Bestätigung vorzumerken, wobei die Bestätigungs-Bediengeste zu einer Bestätigung der Vorauswahl vorgesehen ist und in Abhängigkeit welcher die Steuereinheit (14) eine der Vorauswahl zugeordnete Aktion ausführt und/oder einleitet, wobei die Steuereinheit (14) dazu vorgesehen ist, in dem Betriebszustand die Vorauswahl ausschließlich in Abhängigkeit von vordefinierten Bestätigungs-Bediengesten anzunehmen, wobei die Steuereinheit (14) dazu vorgesehen ist, in dem Betriebszustand die Vorauswahl ausschließlich in Abhängigkeit von vordefinierten und innerhalb einer vordefinierten Bestätigungs-Zeitspanne (24) durchgeführten Bestätigungs-Bediengesten anzunehmen.

2. Kochfeld nach Anspruch 1, **dadurch gekennzeichnet, dass** die Steuereinheit (14) dazu vorgesehen ist, in dem Betriebszustand zumindest eine Verifikations-Routine durchzuführen, um eine Möglichkeit einer Fehlbedienung zu reduzieren.

3. Kochfeld nach einem der vorhergehenden Ansprüche, **dadurch gekennzeichnet, dass** die Steuereinheit (14) dazu vorgesehen ist, in dem Betriebszustand die Markierung (16) ausschließlich in Abhängigkeit von vordefinierten Markierungsbewegungs-Bediengesten über die Anzeigefläche (18) zu bewegen.

4. Kochfeld nach einem der vorhergehenden Ansprüche, **dadurch gekennzeichnet, dass** die Steuereinheit (14) dazu vorgesehen ist, in dem Betriebszustand ausschließlich in einem Bedienbereich (20) vorgenommene Bediengesten zu berücksichtigen.

5. Kochfeld nach einem der vorhergehenden Ansprüche, **dadurch gekennzeichnet, dass** die Steuereinheit (14) dazu vorgesehen ist, in dem Betriebszustand eine Bediengeste ausschließlich in Abhängigkeit einer zuvor erkannten Verifikations-Bediengeste zu berücksichtigen.

6. Kochfeld nach einem der vorhergehenden Ansprüche, **dadurch gekennzeichnet, dass** die Steuereinheit (14) dazu vorgesehen ist, in dem Betriebszustand eine Bediengeste ausschließlich in Abhängigkeit einer zuvor erkannten und über eine vordefinierte Verifikations-Zeitspanne (22) gehaltenen Verifikations-Bediengeste zu berücksichtigen.

7. Kochfeldnach einem der vorhergehenden Ansprüche, **dadurch gekennzeichnet, dass** die Steuereinheit (14) dazu vorgesehen ist, in dem Betriebszustand eine Gestalt und/oder eine Farbe der Markierung (16) zu verändern.

8. Verfahren mit einem Kochfeld nach einem der Ansprüche 1 bis 7 umfassend eine Kochfeldvorrichtung (10), bei dem in wenigstens einem Betriebszustand wenigstens eine Bediengeste eines Bedieners detektiert und in dem Betriebszustand auf Basis der detektierten Bediengeste wenigstens eine Aktion ausgeführt und/oder eingeleitet wird, wobei in dem Betriebszustand in Abhängigkeit von zumindest einer Bestätigungs-Bediengeste zumindest eine Vorauswahl angenommen wird, **dadurch gekennzeichnet, dass** in dem Betriebszustand die Vorauswahl ausschließlich in Abhängigkeit von vordefinierten und innerhalb einer vordefinierten Bestätigungs-Zeitspanne (24) durchgeführten Bestätigungs-Bediengesten angenommen wird.

## Claims

1. Hob with a hob apparatus having a display area (18), a sensor unit (12), which is provided in at least one operating state to detect at least one operating gesture of an operator, and a control unit (14), which is provided in the operating state to carry out and/or initiate at least one action on the basis of the operating gesture detected by the sensor unit (12),
**characterised in that** the control unit (14) is provided in the operating state to move at least one marking (16) over at least the display area (18) as a function of at least one marking movement operating gesture, wherein the control unit (14) is provided in the operating state to make a preselection as a function of a position of the marking (16), wherein the control unit (14) is provided in the operating state to adopt at least the preselection, which is a choice of an object and/or the action from a group of objects and/or actions with the aim of selecting the chosen object and/or the chosen action, as a function of at least one confirmation operating gesture, wherein the control unit (14) is provided in the operating state to make a note of the preselection for subsequent confirmation, wherein the confirmation operating gesture is provided for confirming the preselection and as a function of which the control unit (14) carries out and/or initiates an action assigned to the preselection, wherein the control unit (14) is provided in the operating state to adopt the preselection exclusively as a function of predefined confirmation operating gestures, wherein the control unit (14) is provided in the operating state to adopt the preselection exclusively as a function of predefined confirmation operating gestures that are performed within a predefined confirmation time period (24).

2. Hob according to claim 1, **characterised in that** the control unit (14) is provided in the operating state to perform at least one verification routine, in order to reduce a possibility of faulty operation.

3. Hob according to one of the preceding claims, **characterised in that** the control unit (14) is provided in the operating state to move the marking (16) over the display area (18) exclusively as a function of predefined marking movement operating gestures.

4. Hob according to one of the preceding claims, **characterised in that** the control unit (14) is provided in the operating state to take into consideration exclusively operating gestures that were made in an operating region (20).

5. Hob according to one of the preceding claims, **characterised in that** the control unit (14) is provided in the operating state to take into consideration an operating gesture exclusively as a function of a previously identified verification operating gesture.

6. Hob according to one of the preceding claims, **characterised in that** the control unit (14) is provided in the operating state to take into consideration an operating gesture exclusively as a function of a previously identified verification operating gesture that was held over a predefined verification time period (22).

7. Hob according to one of the preceding claims, **characterised in that** the control unit (14) is provided in the operating state to alter a shape and/or a colour of the marking (16).

8. Method with a hob according to one of claims 1 to 7 comprising a hob apparatus (10), in which in at least one operating state at least one operating gesture of an operator is detected and in the operating state at least one action is carried out and/or initiated on the basis of the detected operating gesture, wherein in the operating state at least one preselection is adopted as a function of at least one confirmation operating gesture, **characterised in that** in the operating state the preselection is exclusively adopted as a function of predefined confirmation operating gestures that are performed within a predefined confirmation time period (24).

## Revendications

1. Table de cuisson comprenant un dispositif de table de cuisson présentant une surface d'affichage (18), une unité de détection (12), laquelle est configurée pour, dans au moins un état de fonctionnement, détecter au moins un geste de commande d'un utilisateur, et une unité de commande (14), laquelle est configurée pour, dans l'état de fonctionnement sur base du geste de commande détecté par l'unité de détection (12), exécuter et/ou entamer au moins une action, **caractérisée en ce que** l'unité de commande (14) est configurée pour, dans l'état de fonctionnement en fonction d'au moins un geste de commande à mouvement de marquage, mouvoir au moins un marquage (16) par le biais d'au moins la surface d'affichage (18), l'unité de commande (14) étant configurée pour dans l'état de fonctionnement en fonction d'une position du marquage (16) effectuer une présélection, l'unité de commande (14) étant configurée pour, dans l'état de fonctionnement en fonction d'au moins un geste de commande d'actionnement, accepter au moins la présélection, laquelle est le choix d'un objet et/ou d'une action parmi un groupe d'objets et/ou d'actions ayant comme but de sélectionner l'objet choisi et/ou l'action choisie, l'unité de commande (14) étant configurée pour, dans l'état de fonctionnement, inscrire la présélection d'une opération consécutive, le geste de commande d'actionnement étant configuré pour l'actionnement de la présélection et en fonction duquel l'unité de commande (14) exécute et/ou entame l'action subordonnée à la présélection, l'unité de commande (14) étant configurée pour, dans l'état de fonctionnement, n'accepter la présélection qu'en fonction des gestes de commande d'actionnement prédéfinis, l'unité de commande (14) étant configurée pour dans l'état de fonctionnement, n'accepter la présélection qu'en fonction de gestes de commande d'actionnement prédéfinis et réalisés dans un créneau temporel d'actionnement (24) prédéfini.

2. Table de cuisson selon la revendication 1, **caractérisée en ce que** l'unité de commande (14) est configurée pour exécuter, dans l'état de fonctionnement, au moins une routine de vérification pour réduire la possibilité d'une commande erronée.

3. Table de cuisson selon l'une des revendications précédentes, **caractérisée en ce que** l'unité de commande (14) est configurée pour ne mouvoir, par le biais de la surface d'affichage (18) dans l'état de fonctionnement, le marquage (16) qu'en fonction de gestes de commande de mouvement de marquage prédéfinis.

4. Table de cuisson selon l'une des revendications précédentes, **caractérisée en ce que** l'unité de commande (14) est configurée pour ne tenir compte, dans l'état de fonctionnement, que de gestes de commande effectués dans une zone de commande (20).

5. Table de cuisson selon l'une des revendications précédentes, **caractérisée en ce que** l'unité de commande (14) est configurée pour ne tenir compte, dans l'état de fonctionnement, d'un geste de commande qu'en fonction d'un geste de commande de vérification préalablement reconnu.

6. Table de cuisson selon l'une des revendications précédentes, **caractérisée en ce que** l'unité de commande (14) est configurée pour ne tenir compte, dans l'état de fonctionnement, d'un geste de commande de vérification qu'en fonction d'un geste de commande de vérification préalablement reconnu et maintenu pendant un créneau temporel de vérification (22) prédéfini.

7. Table de cuisson selon l'une des revendications précédentes, **caractérisée en ce que** l'unité de commande (14) est configurée pour modifier, dans l'état de fonctionnement, la forme et/ou la couleur du marquage (16).

8. Procédé comprenant une table de cuisson selon l'une des revendications 1 à 7, comprenant un dispositif de table de cuisson (10), dans lequel, dans au moins un état de fonctionnement, au moins un geste de commande d'un utilisateur, est détecté et dans l'état de fonctionnement sur base du geste de commande détecté au moins une action est exécutée et/ou entamée, dans l'état de fonctionnement en fonction d'au moins un geste de commande d'actionnement, au moins une présélection étant acceptée, **caractérisé en ce que** dans l'état de fonctionnement, la présélection n'est acceptée qu'en fonction de gestes de commande d'actionnement prédéfinis et réalisés dans un créneau temporel d'actionnement (24) prédéfini.
